# DEMANDE DE BREVET EUROPEEN

(11) **EP 2 124 439 A1**
(43) Date de publication de la demande: **25.11.2009**
(21) Numéro de dépôt: 08156700.0
(22) Date de dépôt: 21.05.2008
(51) Int. Cl.: H04N 7/16

(54) **Méthode d'allocation et de gestion d'abbonements de réception de produits télédiffusés**

(71) Demandeur: Nagravision S.A., 1033 Cheseaux-sur-Lausanne (CH)
(72) Inventeur: Moreillon, Guy, 1042 Bioley-Orjulaz (CH)
(74) Mandataire: Leman Consulting S.A.

(57) **Abrégé**

Le but de la présente invention est de proposer une méthode pour diminuer la bande passante nécessaire au renouvellement des abonnements de réception de services télédiffusés. Ce but est atteint par une méthode d'allocation et de gestion d'abonnements de réception d'une pluralité de produits par au moins un récepteur comprenant un module de sécurité, ce module comprenant une adresse d'identification unique UA0, cette méthode effectuée par un centre de gestion comprenant les étapes suivantes :
- définition d'une pluralité d'ensemble de numéros d'identification d'abonné AB, chaque ensemble étant associé à un produit, et division d'un ensemble en groupe,
- recherche d'un numéro disponible ABk dans un ensemble selon le produit souhaité lors de l'initialisation,
- détermination si ce numéro disponible a déjà été attribué précédemment,
- dans l'affirmative, déterminer si une durée de blocage s'est écoulée entre la fin de l'abonnement précédent et le début du nouvel abonnement, dans la négative, rechercher un nouveau numéro,
- envoi d'un message d'initialisation au nouvel abonné adressé selon son adresse d'identification unique UA0 et contenant le numéro d'identification d'abonné ABk propre à son produit,
- préparation d'un message de groupe de renouvellement de droit du produit au groupe contenant le numéro d'identification d'abonné ABk, ce message comprenant le préfix du groupe contenant cet abonné ABk et un bitmap permettant d'adresser unitairement les membres du groupe,
- compression du bitmap et placement du bitmap compressé dans le message,
- envoi du message de renouvellement.

## Description

### Introduction

La présente demande concerne l'organisation d'un ensemble d'abonnés à des services à accès conditionnel télédiffusés.

### Etat de la technique

Les services audio visuels sont transmis sous forme de flux de données à destination de récepteurs, que ce soit des récepteurs fixes (Set-top-box) ou mobiles. Comme exemple de tel flux de données, on entend un service d'informations boursière, de météo, de télévision généraliste, d'un événement sportif ou autres. Ces contenus peuvent être diffusés sur des unités d'utilisateurs tels qu'un décodeur de télévision à péage, un ordinateur voire un téléphone portable, un "palm-top", un PDA, une radio, une télévision, une borne multimédia.

Le flux numérique est encrypté afin de pouvoir en contrôler l'utilisation et de définir les conditions pour une telle utilisation. Cette encryption est réalisée grâce à des mots de contrôle (Control Words) qui sont changés à intervalle régulier (entre 5 et 30 secondes) afin de dissuader toute attaque visant à retrouver un tel mot de contrôle.

Pour que l'unité d'utilisateur puisse décrypter le flux encrypté par un mot de contrôle, ce dernier lui est envoyé indépendamment du flux dans un message de contrôle (ECM) encrypté par une clé propre au système de transmission entre le centre de gestion (CAS) et le module de sécurité de l'unité d'utilisateur. En effet, les opérations de sécurité sont effectuées dans un module de sécurité (SC) qui est réputée inviolable. Ce module traite les signaux relatifs aux droits du récepteur.

Lors de la décryption du message de contrôle (ECM), il est vérifié, dans le module de sécurité (SC), que le droit pour accéder au flux considéré est présent. Le mot de contrôle n'est retourné sous forme décryptée à l'unité d'utilisateur que lorsque la comparaison est positive.

De façon bien connue de l'homme du métier, le module de sécurité peut être réalisé essentiellement selon quatre formes distinctes. L'une d'elles est une carte à microprocesseur, une carte à puce, ou plus généralement un module électronique (ayant une forme de clé, de badge,...). Un tel module est généralement amovible et connectable au décodeur. La forme avec contacts électriques est la plus utilisée, mais n'exclut pas une liaison sans contact par exemple de type ISO 14443. Il peut prendre également la forme d'une carte SD, microSD, MMC, Memory stick ou tout autre carte mémoire.

Une deuxième forme connue est celle d'un boîtier de circuit intégré placé, généralement de façon définitive et inamovible dans le boîtier du décodeur. Une variante est constituée d'un circuit monté sur un socle ou connecteur tel qu'un connecteur de module SIM.

Dans une troisième forme, le module de sécurité est intégré dans un boîtier de circuit intégré ayant également une autre fonction, par exemple dans un module de désembrouillage du décodeur ou le microprocesseur du décodeur.

Dans une quatrième forme de réalisation, le module de sécurité n'est pas réalisé sous forme matérielle, mais sa fonction est mise en oeuvre sous forme uniquement logicielle. Etant donné que dans les quatre cas, bien que le niveau de sécurité diffère, la fonction est identique, on parlera de module de sécurité quelle que soit la manière de réaliser sa fonction ou la forme que peut prendre ce module.

Le droit de réception est généralement géré par des messages d'autorisation (EMM) qui charge un tel droit dans le module de sécurité (SC). D'autres possibilités sont également possibles tels que l'envoi de clés de décryptage.

Il est connu qu'un tel module de sécurité SC comprend un numéro d'identification unique UA0 chargé en mémoire lors d'une phase d'initialisation. Lors de la souscription d'un abonnement de réception d'un service télévisuel, le module de sécurité SC reçoit un numéro d'identification d'abonné UA1 qui va être utilisé lors de l'adressage de groupe. Selon un exemple ou la taille du groupe est de 512 participants, les 9 derniers bits du numéro d'identification d'abonné UA1 seront ignorés et le filtrage par le récepteur se fera l'adresse UA1 et sur les bits > 9.

C'est ce numéro d'identification d'abonné UA1 qui servira à adresser le module de sécurité en mode adressage de groupe, le numéro unique UA0 intervenant si un adressage individuel est nécessaire. Ceci est le cas lors de modification d'abonnement de produits, par exemple l'inscription dans le module de sécurité d'un abonnement pour un nouveau produit.

Ainsi, le récepteur va configurer son filtre de messages afin de laisser passer les messages contenant en entête le numéro d'identification unique UA0 ou le numéro d'identification d'abonné UA1. Ces numéros sont transmis par le module de sécurité au récepteur afin qu'il puisse initialiser son filtre.

La gestion des abonnements est gérée selon le principe de la reconduction de droits c'est-à-dire qu'un droit est lié à une date d'expiration après laquelle le module de sécurité refuse de considérer ce droit valide. Pour que l'abonné puisse continuer de profiter de son abonnement sans interruption il est donc nécessaire de transmettre un message de reconduction du droit (pour autant que cet abonné aie bien le droit à le recevoir) déplaçant la date d'expiration plus tard dans le temps.

Dans la pratique, la durée de reconduction est typiquement de 1 mois ce qui signifie que tous les récepteurs doivent recevoir un message de reconduction durant le mois. Du fait qu'il s'agit de télédiffusion, le centre de gestion ne connaît pas le moment durant lequel le récepteur est enclenché et c'est pourquoi les messages sont répétés par cycle.

Pour diminuer le nombre de messages a émettre, il a été proposé d'utiliser l'adressage de groupe plutôt que l'adressage individuel. Prenons l'exemple d'un fournisseur proposant 5 produits à abonnement. Il faudra ainsi 5 messages de renouvellement des droits par groupe, chaque message comprenant les conditions de renouvellement pour un produit. Du fait que pas tous les membres du groupe on souscrit au produit concerné par ce message, un message de groupe comprend un champ de type bitmap avec un bit dédié pour chaque abonné. Si un groupe contient 256 membres, le champ de bitmap va contenir 256 bits, chaque bit étant attribué à un module de sécurité spécifique.

Le module de sécurité, lors de la réception du message de groupe, va d'abord vérifier si le bit qui lui est propre est à 1 pour savoir si la commande de renouvellement lui est destinée. Si son bit est à 0, il va ignorer la commande de renouvellement, voire effacer le droit de l'abonnement considéré par ce message.

Il va sans dire qu'un tel message est encrypté et que seul les modules de sécurité disposent de la clé pour le décrypter. De plus, le message contient des données d'authentification assurant que seul l'autorité compétente peut générer un tel message. Ceci est assuré grâce à la cryptographie à clé asymétrique.

Un des problèmes rencontré est bien sûr le nombre de messages de renouvellement à envoyer et par là, utilisant de la bande passante, cette dernière étant mieux utilisée pour des services audiovisuels. Dans notre exemple avec 5 produits, chaque abonné ayant souscrit à un produit, le bitmap sera en moyenne à 20% rempli de 1 pour 80% de 0, ceci si les produits sont uniformément réparti sur les abonnées. Même dans cette situation idéale et fort peu probable, le bitmap aura une structure imprévisible, certains groupes ayant un grand nombre de participants ayant souscrit un produit déterminé alors que d'autres groupes verront qu'un faible nombre de participants ayant souscrit ce même produit. Cette entropie rend la compression du bitmap très difficile.

On imagine la bande passante utilisée lorsqu'il faut servir 2 millions d'abonnés. Une approche consiste donc à augmenter la taille des groupes (1024 ou plus) pour diminuer le nombre de messages mais il faudra alors augmenter la taille du message pour pouvoir contenir un bitmap de 1024 voir 2048 bits, ce qui a pour effet d'augmenter la bande passante utilisée par ces messages et réduire le gain induit par l'utilisation de message de groupe. On le voit, l'augmentation des tailles de groupe n'est qu'une solution partielle.

Un autre problème qui a été observé est le taux de volatilité de la clientèle qui s'abonne et se désabonne quelques mois plus tard. Un numéro d'abonné leur a été attribué qui ne peut plus être utilisé. En effet, le droit est toujours présent dans le premier récepteur (ou module de sécurité) au moment de la fin de l'abonnement. Pour contourner le système de contrôle d'accès, il suffit pour le propriétaire de couper la réception du message contenant dans le bitmap un zéro afin que l'effacement ne se fasse pas. Si ce numéro était réattribué à un second récepteur quelques mois plus tard, il suffirait au premier récepteur de se réenclencher pour recevoir le message de reconduction du droit et indûment recevoir les services audiovisuels.

Pour éviter cela, le numéro attribué à un abonné n'est plus utilisé après sa résiliation. On assiste à la création de nouveaux groupes avec l'arrivée des nouveaux abonnés alors que les anciens groupes se vident et ne contiennent plus que quelques abonnés pour lesquels il est néanmoins nécessaire d'envoyer un message de groupe.

### Brève description de l'invention

Le but de la présente invention est de proposer une méthode pour diminuer la bande passante nécessaire au renouvellement des abonnements de réception de services télédiffusés.

Ce but est atteint par une méthode d'allocation et de gestion d'abonnements de réception d'une pluralité de produits par au moins un récepteur comprenant un module de sécurité, ce module comprenant une adresse d'identification unique UA0, cette méthode effectuée par un centre de gestion comprenant les étapes suivantes :
- définition d'une pluralité ensemble de numéros d'identification d'abonné AB, chaque ensemble étant associé à un produit,
- division d'un ensemble de numéros d'identification d'abonné en groupes de participants,
- recherche d'un numéro disponible ABk dans le produit souhaité lors de l'initialisation d'un nouvel abonnement,
- détermination si ce numéro disponible a déjà été attribué précédemment,
- dans l'affirmative, déterminer si une durée de blocage s'est écoulée entre la fin de l'abonnement précédent et le début du nouvel abonnement, dans la négative, rechercher un nouveau numéro,
- envoi d'un message d'initialisation au nouvel abonné adressé selon son adresse d'identification unique UA0 et contenant le numéro d'identification d'abonné ABk propre à son produit,
- préparation d'un message de groupe de renouvellement de droit du produit au groupe contenant le numéro d'identification d'abonné ABk, ce message comprenant le préfix du groupe contenant cet abonné ABk et un bitmap permettant d'adresser unitairement les membres du groupe,
- compression du bitmap et placement du bitmap compressé dans le message,
- envoi du message de renouvellement.

Par produit, on entend un abonnement à une chaîne de télévision, un bouquet de chaînes ou une série d'événements télévisuel (par ex. saison de football, série, épisodes).

Ainsi le centre de gestion ne gère pas une plage de numéro d'abonnés commune à tous les produit mais une plage spécifique par produit. Ceci a pour conséquence que les groupes constituant les abonnés d'un produit seront en principe complet. Avec l'avantage que par l'envoi d'un message de groupe, une grande majorité des membres du groupe seront concernés par ce message. Un autre avantage est de pouvoir compresser le bitmap du fait qu'il est majoritairement constitué de bits actifs (bit à un).

Les raisons pour qu'un groupe ne soit pas complet sont les suivantes :
- création d'un nouveau groupe lors de l'arrivée de nouveaux clients
- démission d'un membre du groupe, ce numéro étant encore dans la durée de de blocage.

### Brève description des figures

L'invention sera mieux comprise grâce à la description détaillée qui va suivre et qui se réfère aux dessins annexés qui sont donnés à titre d'exemple nullement limitatif, à savoir:
- la figure 1 illustre le cas d'un renouvellement avant la date d'expiration,
- la figure 2 illustre le cas d'un renouvellement après la date d'expiration,
- la figure 3 illustre le cas d'un message de renouvellement arrivant après la date de blocage.

### Description détaillée

L'invention se divise en deux parties coopérant ensemble.

La première partie de l'invention est exécutée dans le système de gestion et est basée sur la méthode d'allocation d'un numéro d'abonné lors de la conclusion d'un contrat. Cette méthode est également exécutée lors d'un changement de produit pour un abonné ou la conclusion d'un abonnement subséquent.

Lors de la définition initiale des plages de numéros par produit, une plage est divisée en groupe (par exemple 2048 membres) chaque numéro est référencé dans une base de données avec des données de gestion. Une de ces données concerne la durée prédéterminée de blocage référencée ci-dessus.

Cette durée est utilisée par le module de sécurité, membre d'un groupe, selon la méthode suivante :
- réception d'un moins un message de groupe de renouvellement de droit pour au moins un produit par le module de sécurité membre dudit groupe, ce message contenant une date d'expiration dudit droit et une date courante,
- vérification que le message de groupe autorise le renouvellement du droit pour ledit module de sécurité,
- vérification que la date courante est antérieure à une date de blocage, dans l'affirmative:

- mise à jour de la date d'expiration dudit droit par la date d'expiration reçue,
- mise à jour d'une nouvelle date de blocage par adjonction d'une durée de blocage à la date de blocage courante, de sorte que la nouvelle date de blocage soit postérieure à la nouvelle date d'expiration.

Ce module dispose d'une adresse unique UA0 et d'au moins une adresse d'abonné ABx qui lui est attribuée lorsqu'il souscrit un abonnement au produit x. De fait, le module se verra attribuer autant d'adresses de groupe ABn que l'abonné a souscrit d'abonnement à des produits. C'est cet adressage qui va être utilisé pour lui envoyer des messages personnalisés (message unique adressé à UAO) ou des messages de groupe (messages partagés adressé à ABn). Un message de groupe comprend dans son en-tête un identificateur de produit qui est comparé par le récepteur avec l'identisation du ou des produits qui sont souscrit par l'abonné de ce module de sécurité. Le module de sécurité de l'abonné va également être membre d'un groupe relatif à ce produit pour recevoir ce type de message. Du fait que ce message s'adresse à un groupe (usuellement de 256, 512, 1024 voire 2048 participants), ce message comprend également une donnée propre à chaque module de sécurité qui est sous la forme d'un bitmap. On place 512 bits (pour l'exemple à 512 participants) dans le message et chaque module de sécurité sait quel est le bit qui le concerne. Le message contient l'adresse de départ du bitmap et les 512 bits du bitmap permettent d'adresser les 512 participants suivant l'adresse de départ. Ainsi la commande contenue dans le message est-elle adressée à un sous ensemble du groupe désigné par le bitmap. De la sorte, si l'on veut renouveler un droit, on place les bits du bitmap à 1 pour tous les membres du groupe pour lesquels le renouvellement est autorisé et à zéro pour les autres.

Lors de la réception d'un message de renouvellement, le module de sécurité, une fois le message pour son groupe reçu, va vérifier dans le bitmap si la commande dans le message lui est adressée. Une fois cette vérification faite, la date de blocage est vérifiée afin de déterminer si cette commande est encore valide pour le module de sécurité.

Il faut préciser que le message de renouvellement comprend une date courante qui va servir pour les comparaisons.

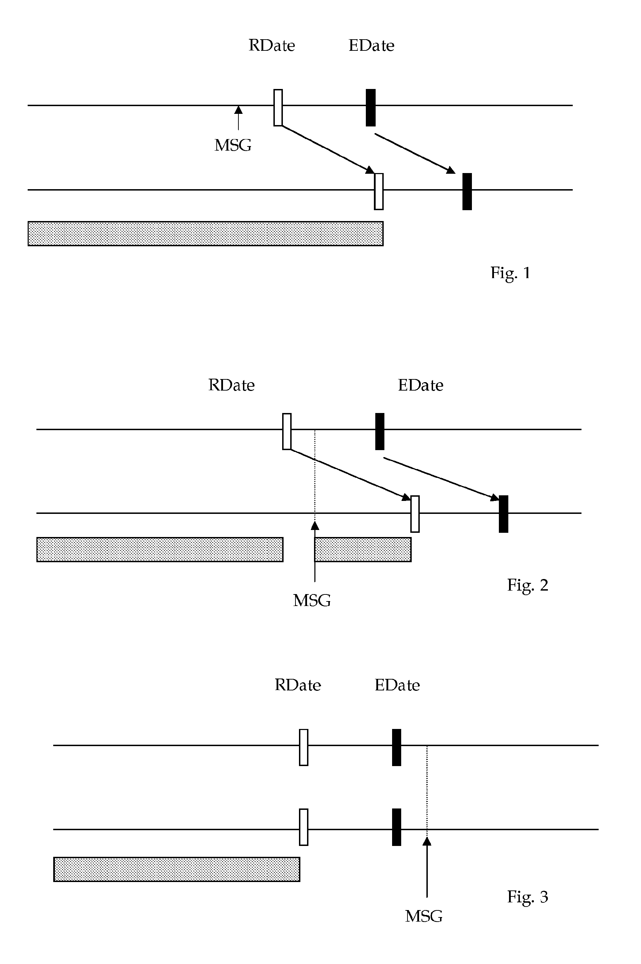

La figure 1 illustre le cas où la date courante du message est située avant la fin de la date d'expiration du droit RDate. La date courante du message de renouvellement étant antérieure à la date d'expiration, le droit est prolongé tel qu'illustré sur la deuxième ligne ainsi que la date de blocage EDate. En grisé est illustré la période d'autorisation du service (ou produit) lié à ce droit qui indique qu'aucune interruption n'a lieu.

La figure 2 illustre le cas où la date courante du message de renouvellement est située après la date d'expiration RDate mais avant la date de blocage EDate. On voit sur la partie grisée que depuis la première date d'expiration jusqu'à l'arrivée du message MSG, l'autorisation au service est interrompue. Une fois le message traité, l'autorisation est rétablie jusqu'à la nouvelle date d'expiration RDate.

Sur la figure 3 est illustré le cas où la date courante du message de renouvellement est située après la date de blocage EDate. Dans ce cas le renouvellement est ignoré et la dernière date d'expiration défini la fin de l'autorisation au service.

Selon un mode de réalisation, un message de renouvellement dans lequel le bit relatif à ce module de sécurité de la bitmap est à zéro provoque la mise à jour de la date d'expiration RDate à la date courante du message et de ce fait provoque l'arrêt de l'autorisation liée au droit. En effet, les messages subséquents de contrôle, contenant les mots de contrôle et le droit nécessaire à la libération de ce mot de contrôle va comprendre une date qui sera postérieure à la date d'expiration RDate.

Selon un mode de réalisation, le module de sécurité comprend une seule date qui est la date d'expiration RDate. De plus, elle comprend une durée de blocage fixée en jour ou mois par exemple qui permet au module de sécurité de calculer la date de blocage dès qu'un message de renouvellement est reçu. La date de blocage est ainsi calculée par la somme de la date d'expiration RDate et de la durée de blocage.

Il n'est ainsi pas nécessaire de mettre à jour deux données de date lors d'un renouvellement. La durée de blocage peut être définie lors de l'initialisation du module de sécurité, par exemple avec le chargement initial du droit.

Selon un autre mode de réalisation de l'invention, la mise à jour d'une nouvelle date de blocage par adjonction d'une durée prédéterminée à la date de blocage courante se fait au centre de gestion et la nouvelle date de blocage est contenue dans le message de renouvellement.

Grâce à la méthode décrite ci-dessous fonctionnant dans un module de sécurité, il est désormais possible de réutiliser un numéro d'identification d'abonné donné. Prenons l'exemple d'un abonné terminant son abonnement le 30 juin. La date d'expiration RDate est donc fixée le 30 juin par le renouvellement de la date précédente, par exemple le 30 mai. Les messages de groupe auquel appartient ce module de sécurité, envoyé durant le mois de juin, vont contenir un zéro dans le bit du bitmap correspondant à ce module de sécurité. Aucun renouvellement ne sera effectué durant le mois de juin. La date de blocage est elle fixée au 30 juillet soit un mois de différence avec la date d'expiration (1 mois = durée de blocage).

Le système de gestion peut donc attribuer le numéro d'identification d'abonné ABk à un autre abonné, sachant qu'après le 30 juillet, même si un message de renouvellement serait accepté par ce module de sécurité (bitmap à 1), le renouvellement ne serait pas effectué.

Ainsi grâce à ce mécanisme, les membres du groupe sont majoritairement des abonnées actifs, la seule condition est de réserver le numéro d'identification d'un abonné ayant résilier son abonnement le temps que la date de blocage soit dépassée. Lors de l'attribution d'un numéro d'identification d'abonné selon un produit donné, il sera donné la préférence à un groupe n'ayant pas atteint le seuil critique qui permette de compresser efficacement le bitmap.

Pour que le bitmap puisse être compressé de manière efficace, il doit être le plus homogène possible. Ainsi un grand nombre de 0 consécutif dans le bitmap peut être un facteur d'homogénéité. De la même manière, un groupe qui se rempli linéairement, soit chaque abonné à la suite du précèdent, permet une compression optimale car une partie consécutive du bitmap est remplie de 1 alors de l'autre partie est remplie de 0 (00000000...0000011111...1111111)

De ce fait le bitmap de ce groupe peut être compressé efficacement sur quelques bytes alors que la taille du groupe est grande, soit plus de 2048 bits (plus de 256 bytes).

## Revendications

1. Méthode d'allocation et de gestion d'abonnements de réception d'une pluralité de produits par au moins un récepteur comprenant un module de sécurité, ce module comprenant une adresse d'identification unique UAO, cette méthode étant effectuée par un centre de gestion et comprenant les étapes suivantes :
- définition d'une pluralité d'ensemble de numéros d'identification d'abonné (AB), chaque ensemble étant associé à un produit constituant son espace d'adressage,
- division d'un ensemble de numéros d'identification d'abonné en groupes de participants,
- recherche d'un numéro disponible (ABk) dans l'espace d'adressage du produit (k) souhaité lors de l'initialisation d'un nouvel abonnement, en débutant par les groupes ayant le plus grand nombre de participants,
- détermination si ce numéro disponible a déjà été attribué précédemment,
- dans l'affirmative, déterminer si une durée de blocage s'est écoulée entre la fin de l'abonnement précédent et le début du nouvel abonnement, dans la négative, rechercher un nouveau numéro,
- envoi d'un message d'initialisation au nouvel abonné adressé selon son adresse d'identification unique UA0 et contenant, en plus du droit pour ce produit, le numéro d'identification d'abonné ABk propre à son produit,
- préparation d'un message de groupe de renouvellement de droit du produit au groupe contenant le numéro d'identification d'abonné ABk, ce message comprenant le préfix du groupe contenant cet abonné ABk et un bitmap permettant d'adresser unitairement les participants du groupe,
- compression du bitmap et placement du bitmap compressé dans le message,
- envoi du message de groupe de renouvellement.

2. Méthode d'allocation et de gestion d'abonnements selon la revendication 1, comprenant de plus les étapes suivantes :
- réception du message de renouvellement de droit pour au moins un produit par le module de sécurité membre dudit groupe, ce message contenant une date d'expiration dudit droit et une date courante,
- vérification que le message de groupe autorise le renouvellement du droit pour ledit module de sécurité,
- vérification que la date courante est antérieure à une date de blocage, dans l'affirmative:
- mise à jour de la date d'expiration dudit droit par la date d'expiration reçue,
- mise à jour d'une nouvelle date de blocage par adjonction d'une durée prédéterminée à la date de blocage courante, de sorte que la nouvelle date de blocage soit postérieure à la nouvelle date d'expiration.

3. Méthode d'allocation et de gestion d'abonnements selon la revendication 2, **caractérisé en ce que** la mise à jour de la nouvelle date de blocage comprend les étapes suivantes :
- calcul au centre de gestion d'une nouvelle date de blocage par adjonction d'une durée prédéterminée à la date de blocage courante,
- adjonction de la nouvelle date de blocage dans le message de renouvellement,
- extraction de la nouvelle date de blocage par le module de sécurité dans le message de renouvellement et mise à jour de date d'expiration dans le module de sécurité.

4. Méthode d'allocation et de gestion d'abonnements selon la revendication 2, **caractérisé en ce que** la mise à jour de la nouvelle date de blocage comprend les étapes suivantes :
- détermination d'une durée de blocage par le centre de gestion et adjonction de ladite durée de blocage dans le message d'initialisation du droit,
- extraction de la durée de blocage du message d'initialisation par le module de sécurité et stockage de ladite durée de blocage,
- lors de la mise à jour de la date d'expiration, calcul de la nouvelle date de blocage par la somme de la nouvelle date d'expiration et la durée de blocage,
- stockage dans le module de sécurité de la nouvelle date de blocage.
